# EUROPEAN PATENT SPECIFICATION

(11) **EP 0 785 974 B1**
(45) Date of publication and mention of the grant of the patent: **10.02.1999**
(21) Application number: 95936476.1
(22) Date of filing: 09.10.1995
(51) Int. Cl.: C09J 163/08, C09J 153/00, C08C 19/06

(54) **CURABLE BINDERS FOR PRESSURE SENSITIVE ADHESIVES AND SEALANTS**
HÄRTBARE BINDEMITTEL VERWENDBAR ALS DRUCKEMPFINDLICHES KLEBEMITTEL UND ALS DICHTUNGSMITTEL
LIANTS DURCISSABLES DESTINES A DES ADHESIFS ET A DES MATERIAUX D'ETANCHEITE AUTOCOLLANTS

(30) Priority: 11.10.1994 US 320803
(43) Date of publication of application: 30.07.1997
(73) Proprietor: SHELL INTERNATIONALE RESEARCH MAATSCHAPPIJ B.V., 2596 HR Den Haag (NL)
(72) Inventor: ERICKSON, James, Robert, Katy, TX 77450 (US); ST. CLAIR, David, John, Houston, TX 77079 (US); MASSE, Michael, Alan, Richmond, TX 77469 (US)
(86) International application number: EP9504013
(87) International publication number: WO9611241

(56) References cited:
- US-A- 4 242 468
- DATABASE WPI Derwent Publications Ltd., London, GB; AN 73-43953u & JP,B,48 025 404 (NIPPON SODA CO KK) , 28 July 1973
- DATABASE WPI Derwent Publications Ltd., London, GB; AN 88-144389 & JP,A,63 086 712 (IDEMITSU PTEROCHEM KK) , 18 April 1988

## Description

The present invention relates to curable binders for pressure sensitive adhesives and sealants which are based on epoxidized poly(conjugated diene) polymers. More specifically, this invention relates to such binders which comprise an epoxidized poly (conjugated diene) polymer and a monohydroxylated diene polymer.

Low viscosity epoxidized poly(conjugated diene) polymers are known to be useful in adhesives and sealants, especially radiation cured pressure sensitive adhesives. When low viscosity epoxidized poly(conjugated diene) polymers are used, they can be made to cure rapidly when the epoxy equivalent weight is low, but they tend to strongly overcure, leaving them of little value as binders for pressure sensitive adhesives. The overcure produces binders which do not allow acceptable aggressive tack and peel values. When the epoxide equivalent weight is made higher, 333 and greater, they do not cure as rapidly, but they have less tendency to overcure and give better tack and peel values. Low viscosity epoxidized star polymers work the best because even with a high epoxide equivalent weight, 333 and greater, they cure rapidly and give acceptable tack and peel because of the relatively large number of epoxide groups per star molecule - as may be derived from e.g. U.S. Patents 5,229,464 and 5,247,026. However, the overall balance of properties, shear resistance vs tack and peel, need further improvement to enhance their overall usefulness.

The present invention provides improved curable binders which satisfy this need. The invention makes use of non load bearing short polymeric arms that are chemically attached to the cured binder gel network. The invention is an advance not only over the referenced low viscosity epoxidized diene polymer technology, but is an advance over the non load bearing arm diene binders made from asymmetric star block copolymers and adhesives described in U. S. Patents 4,391,949 and US 4,444,953.

The present invention provides a curable binder for pressure sensitive adhesive and sealants which comprises from 20 to 95 % by weight of the total polymer of an epoxidized polydiene polymer having an epoxy content of from 0.75 to 7.0 meq of epoxy per gram of polymer, from 5 to 80 % by weight of the total of polymer of a monohydroxylated diene polymer, and/or a polyhydroxylated polydiene polymer, wherein neither the monohydroxylated polymer nor the polyhydroxylated polymer may be epoxidized or contain any other functionality that will react with the epoxy groups on the epoxidized polymer.

The binder can be advantageously combined with tackifying resins, especially hydrogenated ones, to make the desired curable compositions, such as adhesives and sealants. The amount of the tackifying resin may range from 0 to 80% by weight of the total of polymer and resin. In a second embodiment, an excess of a polyhydroxy diene polymer, relative to the available epoxide functionality, is used to effectively replace a part or all of the monofunctional diene polymer.

The term binder as it is used in reference to adhesives and sealants means the components of the system that upon chemical cure, high molecular weight entanglement, or phase separated physical crosslinking, form the soft, flexible, three dimensional network that provides the formulation its cohesive strength under use conditions. Maintenance of network integrity normally relies on chemical cure reactions that produce covalent crosslinking when the formulation must perform at elevated temperatures or in a solvent laden environment.

Block copolymers of conjugated dienes and vinyl aromatic hydrocarbons have been used as binders in such compositions. We have found that excellent curable binders can be formed from blends of epoxidized poly(conjugated diene) polymers and monohydroxylated diene polymers. Generally, when these blends are combined with other formulating ingredients, such as tackifying resins, excellent adhesives or sealants may be formed.

Polymers containing ethylenic unsaturation can be prepared by anionically copolymerizing one or more polyolefins, particularly a diolefin, by themselves or with one or more alkenyl aromatic hydrocarbon monomers. The copolymers may be random, tapered, block or a combination of these, as well as linear, star or radial.

Diene containing polymers, having residual unsaturation suitable for epoxidation, may also be obtained by other means of polymerization, such as by cationic polymerization or free radical polymerization. Using cationic polymerization, monomers such as substituted 1-butenes, 1-pentenes and dienes such as isoprene and butadiene can be copolymerized. Like anionic polymerization, living cationic polymerization allows the copolymers to be block copolymers such that the residual diene double bond can be localized within the polymer. Dienes may be polymerized together with acrylic monomers by initiation with a free radical initiator, such a peroxide or AIBN. For pressure sensitive adhesive applications, monomers such as n-butyl acrylate, 2-ethyl-hexyl acrylate and isoprene may be used, and other modifying monomers, such as acrylic acid or 2-hydroxy-ethyl acrylate may also be used. Other polymerization methods including coordination/insertion mechanisms such as Ziegler-Natta polymerizations, metallocene polymerizations, and metathesis polymerizations can also be used to make polymers such as these.

In general, when solution anionic techniques are used, copolymers of conjugated diolefins and alkenyl aromatic hydrocarbons are prepared by contacting the monomer or monomers to be polymerized simultaneously or sequentially with an anionic polymerization initiator such as group IA metals, their alkyls, amides, silanolates, napthalides, biphenyls or anthracenyl derivatives. It is preferred to use an organo alkali metal (such as lithium, sodium or potassium) compound in a suitable solvent at a temperature within the range from about -150°C to about 300°C, preferably at a temperature within the range from about 0°C to about 100°C. Particularly effective anionic polymerization initiators are organo lithium compounds having the general formula:

RLiₙ

wherein R is an aliphatic, cycloaliphatic, aromatic or alkyl-substituted aromatic hydrocarbon radical having from 1 to 20 carbon atoms and preferably from 3 to 5 carbon atoms and n is an integer of 1 to 4.

Conjugated diolefins which may be polymerized anionically include those conjugated diolefins containing from 4 to 24 carbon atoms such as 1,3-butadiene, isoprene, piperylene, methylpentadiene, phenylbutadiene, 3,4-dimethyl-1,3-hexadiene, 4,5-diethyl-1,3-octadiene and the like. Isoprene and butadiene are the preferred conjugated diene monomers for use in the present invention because of their low cost and ready availability. Alkenyl aromatic hydrocarbons which may be copolymerized include vinyl aryl compounds such as styrene, various alkyl-substituted styrenes, alkoxy-substituted styrenes, vinyl napthalene and alkyl-substituted vinyl napthalenes.

In general, any of the solvents known in the prior art to be useful in the preparation of such polymers may be used. Suitable solvents include straight- and branched chain hydrocarbons such as pentane, hexane, heptane, octane and the like, as well as, alkyl-substituted derivatives thereof; cycloaliphatic hydrocarbons such as cyclopentane, cyclohexane, cycloheptane and the like, as well as alkyl-substituted derivatives thereof; aromatic and alkyl-substituted derivatives thereof; aromatic and alkyl-substituted aromatic hydrocarbons such as benzene, napthaiene, toluene, xylene and the like; hydrogenated aromatic hydrocarbons such as tetralin, decalin and the like; linear and cyclic ethers such as dimethyl ether, methylethyl ether, diethyl ether, tetrahydrofuran and the like.

More specifically, the polymers of the present invention are made by the anionic polymerization of conjugated diene monomers and alkenyl aromatic hydrocarbon monomers in a hydrocarbon solvent at a temperature between 0 and 100C using an alkyl lithium initiator. The living polymer chains are usually coupled by addition of divinyl monomer to form a star polymer. Additional monomers may or may not be added to grow more branches or to terminally functionalize the polymer. The living chain ends are quenched with a proton source.

The hydroxylated polydienes are synthesized by anionic polymerization of conjugated diene hydrocarbons with lithium initiators. This process is well known as described in U.S. Patents Nos. 4,039,593 and Re. 27,145. Polymerization commences with a monolithium, dilithium, or polylithium initiator which builds a living polymer backbone at each lithium site. Typical monolithium living polymer structures containing conjugated diene hydrocarbons are:

X-A-B-Li

X-A-B-A-Li

wherein B represents polymerized units of one conjugated diene hydrocarbon such as butadiene, A represents polymerized units of another conjugated diene such as isoprene, and either A or B may contain or be formed of one or more vinyl aromatic compounds such as styrene, and X is the residue of a monolithium initiator such as sec-butyllithium. The hydroxyl groups are added by terminating the polymerization with ethylene oxide.

Epoxidation of the base polymer can be effected by reaction with organic peracids which can be preformed or formed in situ. Suitable preformed peracids include peracetic and perbenzoic acids. In situ formation may be accomplished by using hydrogen peroxide and a low molecular weight fatty acid such as formic acid. Alternatively, hydrogen peroxide in the presence of acetic acid or acetic anhydride and a cationic exchange resin will form a peracid. The cationic exchange resin can optionally be replaced by a strong acid such as sulfuric acid or p-toluenesulfonic acid. The epoxidation reaction can be conducted directly in the polymerization cement (polymer solution in which the polymer was polymerized) or, alternatively, the polymer can be redissolved in an inert solvent. These methods are described in more detail in U. S. Patents 5,229,464 and 5,247,026.

The epoxidized polymers used in this invention may be relatively low in molecular weight to produce low viscosity binders or they may be higher in molecular weight to produce high viscosity/solid binders. For the low viscosity type, the weight average molecular weight of a linear polymer should be 20,000 or less, but at least 1000 because below about 1000 there are too few epoxides per molecule to allow sufficient sites for the monohydroxylated diene polymer attachment and sites for crosslinking. For a radial or star polymer, the arm weight average molecular weights should be in this range. For the high viscosity or solid type of binder system, the epoxidized polymer should have a molecular weight of greater than 20,000 for linear polymers and the arm molecular weights of radial or star polymers should also be greater than 20,000. Such higher viscosity binder systems are useful in conventional hot melt and solvent applied systems.

The amount of epoxidation of these polydiene polymers ranges from 0.75 to 7 milliequivalents of epoxide per gram of polymer, because below 0.75 meq/g polymer cure is inadequate in the presence of the monohydroxy diene polymer, while going above 7 meq/g increases the rigidity, crosslink density, cost, difficulty to manufacture, and polarity of the polymer (so as to not accept the monohydroxy diene polymer). The preferred amount of epoxidation is 1.0 to 5 meq/g and the most preferred amount of epoxidation is 1.0 to 3 meq/g. The widest range of epoxy contents may be used herein to produce curable adhesives and sealants, because the presence of the monohydroxylated polydiene can be adjusted to increase or decrease the amount of epoxide available for the crosslinking reactions or adhesion. However, the preferred ranges are better because they allow optimal formulation latitude.

Preferred epoxidized polymers for use herein are those of the formula

(A-B-Aₚ)ₙ-Yᵣ-(A_{q}-B)ₘ

wherein Y is a coupling agent, coupling monomers or an initiator, and wherein A and B are polymer blocks which are homopolymer blocks of conjugated diolefin monomers, copolymer blocks of conjugated diolefin monomers, or copolymer blocks of conjugated diolefin monomers and monoalkenyl aromatic hydrocarbon monomers. The A blocks have a greater number of di-, tri- and tetra-substituted epoxides per unit of block mass than do the B blocks. The A blocks have a molecular weight as measured by gel permeation chromatography from 100 to 3000 and the B blocks have a molecular weight as measured by gel permeation chromatography from 1000 to 15,000. p and q are 0 or 1 and n > 0, r is 0 or 1, m ≥ 0 and n + m ranges from 1 to 100. Other preferred polymers for use herein are described in U. S. Patents 5,229,464 and 5,247,026.

The epoxidized polymer of this invention may also be monohydroxylated. Said polymers are epoxidized monohydroxylated polymers of at least two polymerizable ethenically unsaturated hydrocarbon monomers wherein at least one is a diene monomer which yields unsaturation suitable for epoxidation. Preferably, they are diblocks of isoprene and butadiene wherein the hydroxyl is attached at the end of the butadiene block and most of the epoxy groups are in the isoprene block.

The amount of the epoxidized polymer must be no less than about 20% by weight of the binder wherein the binder is the combination of the epoxidized diene polymers and the hydroxy diene polymers in the formulation. Correspondingly, the binder must not have more than about 80 weight % of the mono-, di-, or polyhydroxy diene polymers. The properties of this binder system suffer when more than 80% hydroxylated polymers are used in the binder. In particular, the cohesive strength of the binder is adversely affected. Generally, there must be at least 5% by weight of the hydroxylated polymers for them to have much affect on the binder performance.

The monohydroxylated polymer reacts with the epoxidized polymer to some extent, taking up some of the epoxy functionality that would otherwise cause overcuring. This results in non load bearing polymer chains extending from the epoxidized polymer which imparts additional aggressive tack to the blend. Neither the monohydroxylated polymer nor the polyhydroxylated polydiene polymers discussed below may be epoxidized or contain any other functionality which will react with the epoxy groups on the epoxidized polymer. It is important that the monohydroxylated polymer react only through the hydroxyl group so that the extending non load bearing chains referred to above are provided. Otherwise, some of the aggressive tack properties will suffer.

Both the hydroxyl equivalent weight and the weight average molecular weight of the monohydroxylated diene polymer should be between 1000 and 20,000, preferably between 2,000 and 10,000, and most preferably between 3,000 and 6,000. For essentially monodisperse polymers, the hydroxyl equivalent weight and the weight average molecular weight are essentially the same. For more polydisperse polymers, both of these characteristics must to be monitored and kept within the range described herein. The lower molecular weights are especially suitable for use with low viscosity epoxidized diene polymer and the preferred ranges of equivalent weights provide the best peel and tack enhancement to the binder.

Preferred monohydroxlated polydienes for use herein include isoprene and butadiene monols and hydrogenated versions thereof. Also included the unepoxidized precursors of the monohydroxylated epoxidized polymers described in the copending commonly assigned U. S. patent application discussed above.

Polyhydroxylated polymers can be added as a third component to enhance the properties in some cases. The preferred polyhydroxylated polydiene polymer is one having two hydroxyl groups, one on each end of the polymer. The preferred dihydroxylated polydiene polymer makes an effective non load bearing branch when reacted in excess with the epoxidized polymer. This polymer can be made using a di-lithium initiator, such as the compound formed by reaction of two moles of sec-butyllithium with one mole of diisopropylbenzene. This diinitiator is used to polymerize a diene in a solvent composed of 90%w cyclohexane and 10%w diethylether. The molar ratio of diinitiator to monomer determines the molecular weight of the polymer. The living polymer is then capped with two moles of ethylene oxide and terminated with two moles of methanol to yield the desired dihydroxy polydiene. Dihydroxylated diene polymers can also be made using a mono-lithium initiator which contains a hydroxyl group which has been blocked as the silyl ether.
Polyhydroxylated polydiene polymers can also be obtained using another similar technology.
Multifunctional-lithium initiators can be prepared from reaction of sec-butyllithium with diisopropylbenzene at less than a 2:1 molar ratio. These multi-lithium initiators can then be used to polymerize a diene in solvent. The living polymers are then capped with ethylene oxide and terminated with methanol to give the polyhydroxylated polydiene polymer. Alternatively, the protected mono-lithium initiator can be used to polymerize butadiene or isoprene. The living polymer can be coupled with a multifunctional coupling agent and the blocking agent is removed, regenerating the hydroxyl group.

The weight average molecular weights for a linear polyhydroxylated diene polymer or for the arms of a branched polymer are the same as for the monohydroxylated diene polymer, but the hydroxy equivalent weights are one half those values. The molecular weight of the polyhydoxylated diene polymer should be between 1000 and 20,000, preferably between 2,000 and 10,000, and most preferably between 3,000 and 6,000. The hydroxyl equivalent weight of the polyhydroxylated diene polymer should be between 500 and 10,000, preferably between 1,000 and 5,000, and most preferably between 1,500 and 3,000.

The monohydroxylated polymer may be used as the only hydroxyl source when the molar ratio (R) of the amount of epoxide functionality to the amount of hydroxyl functionality in the binder (epoxidized polymer + monohydroxylated polymer + optional polyhydroxylated polymer) is 1.5 or greater.
Polyhydroxy, especially dihydroxy, diene polymers should be used in situations when R < 1.5 in the presence of the monohydroxy diene polymer. In this situation the polyhydroxylated polymer is generally used in a more or less equal amount to the monohydroxylated polymer and serves as flexible crosslinker for the binder system. As a crosslinker, it replaces some of the epoxy-epoxy crosslinking in building the covalent gel network. Care must be taken to leave enough epoxide sites for incorporation of sufficient monohydroxylated polymer. As R is decreased, more polyhydroxylated polymer must be used until R gets to 0.75 wherein the hydroxyl source must be almost entirely polyhydroxylated polymer.

When R is between 0.75 and 1, there are insufficient epoxide sites for both of the hydroxyls on every dihydroxylated polymer to react. Some crosslinking will occur because some of the dihydroxylated polymer will react on both ends. If more dihydroxylated polydiene polymer is added, such that R < 0.75, more and more of the dihydroxylated polymer will either be unattached to the epoxide polymer or will be reacted only on one end such that the covalent gel network will fail to develop and the cohesive strength will be completely dependent on only molecular entanglements, which are minimal in the case of low viscosity polymers. Obviously, an effective adhesive product cannot be made with such a polymer. Polyhydroxy diene polymers with greater than two hydroxyl groups per molecule may also be used with similar results.

The molecular weights of linear polymers or unassembled linear segments of polymers such as mono-, di-, triblock, etc., arms of star polymers before coupling are conveniently measured by Gel Permeation Chromatography (GPC), where the GPC system has been appropriately calibrated. For the polymers of the type described herein, the appropriate standards are narrow molecular weight distribution polybutadiene standards. For anionically polymerized linear polymers, the polymer is essentially monodisperse (weight average molecular weight/number average molecular weight ratio approaches unity), and it is both convenient and adequately descriptive to report the "peak" molecular weight of the narrow molecular weight distribution observed. Usually, the peak value is between the number and the weight average. The peak molecular weight is the molecular weight of the main species shown on the chromatograph. For polydisperse polymers the weight average molecular weight should be calculated from the chromatograph and used. For materials to be used in the columns of the GPC, styrene-divinyl benzene gels or silica gels are commonly used and are excellent materials. Tetrahydrofuran is an excellent solvent for polymers of the type described herein. A refractive index detector may be used.

Measurement of the true molecular weight of a coupled star polymer is not as straightforward or as easy to make using GPC. This is because the star shaped molecules do not separate and elute through the packed GPC columns in the same manner as do the linear polymers used for the calibration. Hence, the time of arrival at the refractive index detector is not a good d indicator of the molecular weight. A good method to use for a star polymer is to measure the weight average molecular weight by light scattering techniques. The sample is dissolved in a suitable solvent at a concentration less than 1.0 gram of sample per 100 milliliters of solvent and filtered using a syringe and porous membrane filters of less than 0.5 microns pore size directly into the light scattering cell. The light scattering measurements are performed as a function of scattering angle, polymer concentration and polymer size using standard procedures. The differential refractive index (DRI) of the sample is measured at the same wave length and in the same solvent used for the light scattering. In this connection reference is made to:
1. Modern Size-Exclusion Liquid Chromatography, M. W. Yau, J. J. Kirkland, D. D. Bly, John Wiley and Sons, New York, New York, 1979.
2. Light Scattering From Polymer Solutions, M. B. Huglin, ed., Academic Press, New York, New York, 1972.
3. W. K. Kai and A. J. Havlik, Applied Optics, 12, 541 (1973).
4. M. L. McConnell, American Laborator, 63, May, 1978.

If desired, these block copolymers can be partially hydrogenated. Hydrogenation may be effected selectively as disclosed in U.S. Patent Reissue 27,145. The hydrogenation of these polymers and copolymers may be carried out by a variety of well established processes including hydrogenation in the presence of such catalysts as Raney Nickel, nobel metals such as platinum and the like, soluble transition metal catalysts and titanium catalysts as in U.S. Patent 5,039,755. The polymers may have different diene blocks and these diene blocks may be selectively hydrogenated as described in U.S. Patent 5,229,464. Partially unsaturated monohydroxylated polymers are preferred for use herein in order to allow further functionalization such as to make the epoxidized polymers of this invention.

The binders of this invention may be cured by cationic means using acid catalysts but are preferably cured by means of ultraviolet or electron beam radiation. Radiation curing utilizing a wide variety of electromagnetic wavelength is feasible. Either ionizing radiation such as alpha, beta, gamma, X-rays and high energy electrons or non-ionizing radiation such as ultraviolet, visible, infrared, microwave and radio frequency may be used. A complete description of how this irradiation may be accomplished is found in commonly assigned U. S. Patent 5,229,464.

When using non-ionizing radiation it is necessary to employ a photoinitiator to initiate the crosslinking reaction. Useful photoinitiators include diaryliodonium, alkoxy-substituted diaryliodonium, triarylsulfonium, dialkylphenacylsulfonium, dialkyl-4-hydroxylphenyl-sulfonium salts. The anions in these salts generally possess low nucleophilic character and include SbF₆-, BF₄-, PF₆-, AsF₆-, and B(C₆F₅)₄- (tetrakis (penta-fluorophenyl)borate). Specific examples include (4-octyloxyphenyl)-phenyliodonium hexafluoroantimonate, UVI-6990 (from Union Carbide), FX-512 (3M Company)., and SILCOLEASE UV200CATA photoinitiators (Rhone-Poulenc Chemie). Bis(dodecylphenyl)iodonium hexafluoroantimonate, UV 9310 (GE), and, UVI-6974 (Union Carbide), are especially effective. The onium salts can be used alone or in conjunction with a photosensitizer to respond to long wave length UV and visible light. (SILCOLEASE UV, UV, UVI are trademarks) Examples of photosensitizers include thioxanthone, anthracene, perylene, phenothiazione, 1,2-benzathracene coronene, pyrene and tetracene. The photoinitiator and photosensitizer are chosen to be compatible with the polymer being crosslinked and the light source available.

Radiation induced cationic curing may also be done in combination with free radical curing. Free radical curing can be further enhanced by the addition of additional free radical photoinitiators and photosensitizers.

Reactive diluents that can be added to the binder system include both mono and multifunctional alcohols, vinyl ethers, multifunctional epoxides, and acrylate and methacrylate monomers. Examples of reactive diluent alcohols include 2-ethyl-1,3-hexanediol, lauryl alcohol, NEODOL 25, NEODOL 23, NEODOL 23-3, NEODOL 23-3(AEC) (SHELL), 1,6-hexane diol, 1,4-butane diol, and neopentylglycol (NEODOL is a trademark). Wax-like additives and diluents will detract from good pressure sensitive adhesive properties. Basic materials should be avoided since they interfere with cationic curing.

Additionally, oligomeric and polymeric materials such as alcohols, epoxides, arcylates, and methacrylates, and unfunctionalized polymers can also be added to the binder system, to modify viscosity, cost, compatibility, solubility, cure, and etc. Examples of multifunctional oligomeric epoxides include epoxidized fatty oils, such as soya and linseed epoxidized oils and Vernonia oil. Examples of alcohols include e-Caprolactone based polyols such as TONE 301 (Union Carbide), polyether diols such as VORANOL 234-630 (DOW), POLY THF (BASF), and TERATHANE 1000 (DUPONT). (VORANOL, TONE, TERATHANE, BASF, DUPONT, DOW are trademarks).

It is important to recognize that additional formulating ingredients that can chemically react with the epoxide or the hydroxyl on the binder system can interfere with the invention if they are not used judiciously. Large sources of either epoxide, hydroxyl, or any functional group that can effectively compete for these groups must be avoided. In particular the relative amount of hydroxy from all monohydroxyl ingredients relative to hydroxyl from polyhydroxyl sources should follow the guidelines described above for ratio R. Further, large amounts of very low equivalent weight alcohols and epoxides need to be avoided such that the average equivalent weight of all the hydroxyl sources should be at least about 500, and the average equivalent wight of all the epoxide sources should be at least about 140. Large amounts of monofunctional monoepoxides should be avoided.

In adhesive applications, as well as in sealants, it may be necessary to add an adhesion promoting or tackifying resin that is compatible with the polymer. The amount of such tackifying resin used may vary from 0 up to 80 w% of the combined amount of the binder and the tackifiers. More than 80 w% appreciably weakens the cohesive strength of the formulation]. A common tackifying resin is a diene-olefin copolymer of piperylene and 2-methyl-2-butene having a softening point of 95°C. This resin is available commercially under the tradename WINGTACK 95 (trademark) and is prepared by the cationic polymerization of 60% piperlene, 10% isoprene, 5% cyclo-pentadiene, 15% 2-methyl-2-butene and 10% dimer, as taught in U.S. Patent No. 3,577,398. Other tackifying resins may be employed wherein the resinous copolymer comprises 20-80 weight percent of piperylene and 80-20 weight percent of 2-methyl-2-butene. The resins normally have ring and ball softening points as determined by ASTM method E28 between 80°C and 115°C. Hydrogenated tackifying resins are preferred because they do not interfere with the curing of the composition.

Aromatic resins may also be employed as tackifying agents, provided that they are compatible with the particular polymer used in the formulation. Normally, these resins should also have ring and ball softening points between 80°C and 115°C although mixtures of aromatic resins having high and low softening points may also be used. Useful resins include coumarone-indene resins, polystyrene resins, vinyl toluene-alpha methylstyrene copolymers and polyindene resins.

Other adhesion promoting resins which are also useful in the compositions of this invention include hydrogenated rosins, esters of rosins, polyterpenes, terpenephenol resins and polymerized mixed olefins, lower softening point resins and liquid resins. An example of a liquid resin is ADTAC LV resin from HERCULES. To obtain good thermo-oxidative and color stability, it is preferred that the tackifying resin be a saturated resin, e.g., a hydrogenated dicyclopentadiene resin such as ESCOREZ 5000 series resin made by EXXON or a hydrogenated polystyrene or polyalphamethylstyrene resin such as REGALREZ resin made by HERCULES. (ADTAC, ESCOREZ, REGALREZ, EXXON and HERCULES are trade marks). The amount of adhesion promoting resin employed varies from 0 to 80 w% of the sum of the binders and the tackifiers, preferably between 25 to 75 w%, most preferably 40 to 60 w%. The selection of the particular tackifying agent is, in large part, dependent upon the specific polymer employed in the respective adhesive composition.

A composition of the instant invention may contain plasticizers, such as rubber extending plasticizers, or compounding oils or organic or inorganic pigments and dyes. Rubber compounding oils are well-known in the art and include both high saturates content oils and high aromatics content oils. The usually preferred plasticizers are highly saturated oils, e.g. TUFFLO 6056 and 6204 oil made by ARCO and process oils, e.g. SHELLFLEX 371 oil made by SHELL. However, in the present invention, processing oils are thought to be particularly detrimental to the cohesive strength of the adhesive or sealant, and should be kept to a minimum. (TUFFLO, ARCO, SHELL and SHELLFLEX are trade marks).

Optional components of the present invention are stabilizers which inhibit or retard heat degradation, oxidation, skin formation and color formation. Stabilizers are typically added to the commercially available compounds in order to protect the polymers against heat degradation and oxidation during the preparation, use and high temperature storage of the composition.

Various types of fillers and pigments can be included in the sealant formulation. This is especially true for exterior sealants in which fillers are added not only to create the desired appeal but also to improve the performance of the sealant such as its weatherability. A wide variety of fillers can be used. Suitable fillers include calcium carbonate, clays, talcs, silica, zinc oxide, titanium dioxide and the like. The amount of filler usually is in the range of 0 to 65%w based on the solvent free portion of the formulation depending on the type of filler used and the application for which the sealant is intended. An especially preferred filler is titanium dioxide.

All adhesive and sealant compositions based on the epoxidized polymers of this invention will contain some combination of the various formulating ingredients disclosed herein. No definite rules can be offered about which ingredients will be used. The skilled formulator will choose particular types of ingredients and adjust their concentrations to give exactly the combination of properties needed in the composition for any specific adhesive or sealant application.

The only ingredients that will always be used in any adhesive or sealant are the epoxidized polymer and the monohydroxylated polydiene or polyhydroxyl diene polymer in place of the monohydroxylated diene polymer when R < 1.5. Beyond these ingredients, the formulator will choose to use or not to use among the various resins, fillers and pigments, plasticizers, reactive oligomers, stabilizers and solvents.

The adhesive and sealant compositions of the present invention can be prepared by blending the components at an elevated temperature, preferably between room temperature and 200°C, until a homogeneous blend is obtained, usually less than three (3) hours. Various methods of blending are known to the art and any method that produces a homogenous blend is satisfactory. Alternatively, the ingredients may be blended into a solvent. The resultant compositions may then be used in a wide variety of applications.

The adhesive compositions of the present invention may be utilized in many different kinds of adhesives, for example, laminating adhesives, pressure sensitive adhesives, tie layers, hot melt adhesives, solvent borne adhesives, and waterborne adhesives in which the water has been removed before curing. The adhesive can consist of simply the crosslinked binder or, more commonly, a formulated composition containing a significant portion of the polymer along with other known adhesive composition components.

The adhesive compositons of the present invention are also particularly well suited for use as pressure sensitive adhesives (PSA's). PSA's are used in a tremendous variety of applications, ranging from tapes for packaging and masking, to labels for marking and decoration, to health care products such as disposable diapers and fasteners for medical devices. The adhesives, in solvent, in water, or as hot melt, are usually applied onto a paper or film backing. The adhesive is heated if necessary to evaporate any solvent or water. It is then self wound onto the release coated backing as a tape, or it is laminated to a sheet of release paper and die-cut as a label.

Sealants are gap fillers. Therefore, they are used in fairly thick layers to fill the space between two substrates. Since the two substrates frequently move relative to each other, sealants are usually low modulus compositions capable of withstanding this movement. Since sealants are frequently exposed to the weather, the hydrogenated versions of these polymers are usually used. Resins and plasticizers will be selected to maintain low modulus and minimize dirt pick-up. Fillers and pigment will be selected to give appropriate durability and color. Since sealants are applied in fairly thick layers, solvent content is as low as possible to minimize shrinkage.

A formulator skilled in the art will see tremendous versatility in the epoxidized polymers of this invention to prepare adhesives and sealants having properties suitable for many different applications.

### Examples

In the examples several adhesives tests are used to demonstrate the properties of test formulations using the improved binders of this invention. The degree of covalent cure obtained for each of the adhesive samples was measured by use of a polymer gel content test developed by J. R. Erickson for radiation curing adhesives, and first described in the article "Experimental Thermoplastic Rubbers for Enhanced Radiation Crosslinking of Hot Melt PSA's", TAPPI 1985 Hot Melt Symposium Proceedings, June 1985. The method as practiced for the present examples is essentially identical to the method as published, but for a few minor improvements and corrections. The w % values indicate the weight percentage of the binder polymers that are covalently attached to the three dimensional gel network. 180° Peel from polished steel was determined using Pressure Sensitive Tape Council Method No. 1. Large values indicate high strength when peeling a test tape form the substrate. Loop Tack (LT) was determined using a TLMI Loop Tack Tester. Polyken Probe Tack (PPT) was determined by ASTM D2979. High values for LT and PPT indicate aggressive tack.
Holding Power (HP) is the time required to pull a standard area 2.540 x 10⁻²m x 2.540 x 10⁻²m (1 inch x 1 inch) of tape from a standard test surface (MYLAR, steel) under a standard load 9.903 N (500 g), 19.614 N (2 Kg), in 2° antipeel (Pressure Sensitive Tape Council Method No. 7), at a certain temperature (23°C, 95°C). Long times indicate high adhesive and cohesive strength. Shear Adhesion Failure Test (SAFT) is similar to HP, except that the temperature at which failure occurs is recorded. SAFT is carried out in a oven that ramps up at a rate of 40°F per hour. High temperature values indicate high cohesive and adhesive strength.

A number of polymers are used in the binder systems for examples 1 to 6. Many of their important characteristics are given in the table below.

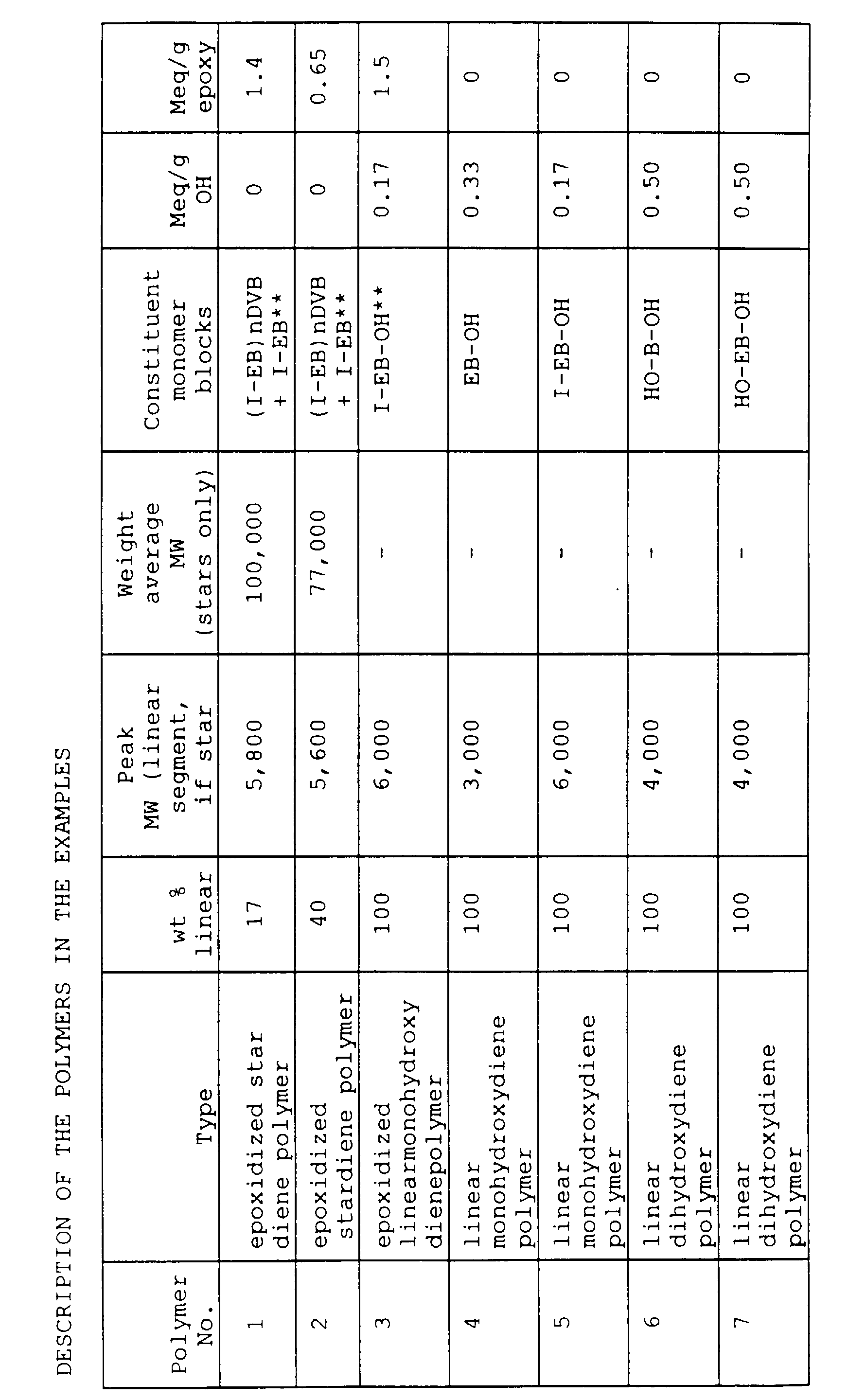

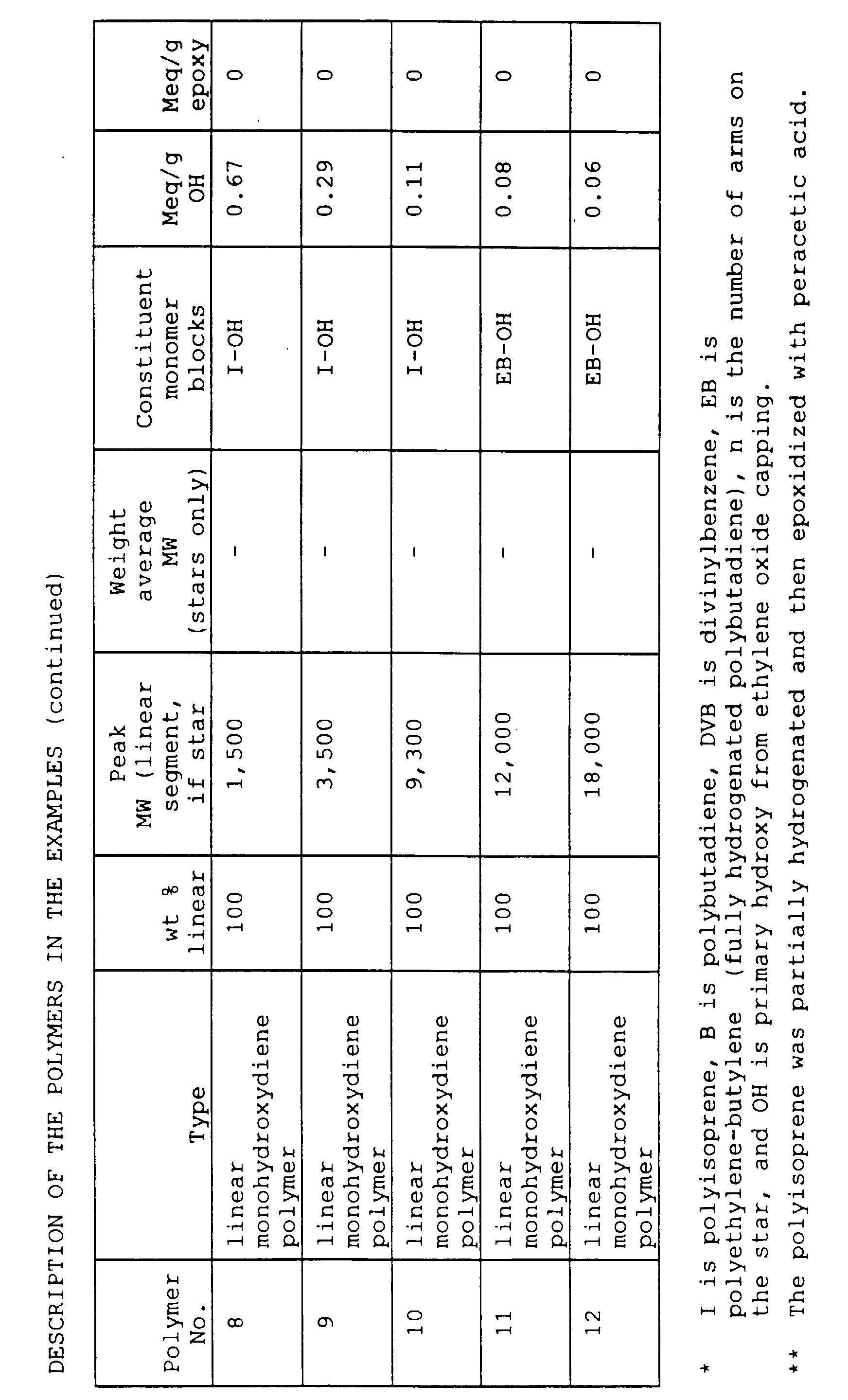

A number of other formulation ingredients are also used in the examples, and they are described in the table below.

| DESCRIPTION OF FORMULATION INGREDIENTS IN THE EXAMPLES | | |
|---|---|---|
| Name | Description | Supplier |
| UVI 6974 | sulfonium salt cationic photoinitiator | UNION CARBIDE |
| | | |
| IRGANOX 1010 | phenolic type antioxidant | CIBA-GEIGY |
| | | |
| REGALREZ 1085 | hydrogenated tackifying resin | HERCULES |
| | | |
| SHELLFLEX 371 | processing oil | SHELL |

### Example 1

Adhesives 1-A to 1-D, shown on the top of Table 1, were prepared by solvent mixing all of the ingredients at room temperature using tetrahydrofuran (THF) as the solvent. The adhesive solutions were cast onto clean 2.54 x 10⁻⁵m (1 mil) MYLAR sheets. Final dry film thickness of the adhesives was 1.01 x 10⁻⁴m-1.27 x 10⁻⁴m (4-5 mils). The test films were directly UV cured, with the adhesives facing the incoming radiation at 0,152 m/sec (30 feet per minute (fpm)) conveyor speed under a single medium pressure Hg bulb, using a LINDE Photocure processor. A nitrogen atmosphere was used only for the purpose of reducing ozone from the bulb, as cationic systems do not need an oxygen free atmosphere to cure. A lightbug was also passed under the lamp to measure the radiation dose. A dose of 154 mJ/cm was recorded. Immediately after the UV exposure, the test adhesives were postbaked for 10 minutes at 121°C. They were tested for properties which are also shown in Table 1. Polymer 2 is a star polymer having only 0.65 meq epoxide per gram, while Polymer 1 is a star polymer having 1.4 meq epoxide per gram. Adhesive 1-A, which contains Polymer 2 and a monohydroxy diene polymer, did not cure well (the 44w% gel) and lacks cohesive strength as indicated by the "v"s (meaning viscous splitting of the adhesive) associated with the low test values shown. In fact, it is not better, and likely poorer than Adhesive 1-C which uses only Polymer 2 as the binder. Adhesive 1-A is not an example of the invention because the epoxy content of the Polymer 2 is less than 0.75 meq epoxide per gram of polymer. Adhesive 1-C is also not an example of the invention because it does not contain any monohydroxy polydiene polymer. On the other hand, Adhesives 1-B and 1-D, which use Polymer 1, cure well (86 and 94 w% gel) and have good cohesive strength. Adhesives 1-B and 1-D, although they have very little aggressive tack, provide excellent holding power. Adhesives 1-B and 1-D could be used as repositionable assembly adhesives. They would not make good PSA's because of their small tack values. To make PSA's using the binder systems of 1-B and 1-D, tackifying resin should be added. Both 1-B and 1-D are examples of the invention because the epoxidized polymer, Polymer 1, has an epoxide 1.4 meq/g and 51 w% and 28 w%, respectively, of the monohydroxy polydiene polymer, Polymer 4, is present.

**Table 1**

| UV Curable Adhesives Comparisons Using No Tackifying Resin 100 part formulations shown with results | | | | |
|---|---|---|---|---|
| Ingredient* | 1-A | 1- B | 1- C | 1- D |
| Polymer 1 | 0 | 48.7 | 0 | 72.0 |
| Polymer 2 | 66.7 | 0 | 99.4 | 0 |
| Polymer 4 | 32.7 | 50.7 | 0 | 27.3 |
| UVI 6974 | 0.50 | 0.50 | 0.50 | 0.50 |
| IRGANOX 1010 | 0.15 | 0.15 | 0.15 | 0.15 |
| w% epoxidized polymer component in the binder | 67 | 49 | 100 | 72 |
| w% linear monohydroxy diene polymer in the binder | 33 | 51 | 0 | 28 |
| Ratio of Epoxide to Hydroxyl | 4 | 4 | infinite | 11 |

| Adhesive Properties after UV cure and post bake: | | | | |
|---|---|---|---|---|
| Gel content of binder mix* (w%) | 44 | 86 | 53 | 94 |
| 180° Peel from steel (pli) | 0.6 v | 0.0 a | 0.3 a | 0.1 a |
| TMI Loop Tack (pli) | 1.1 v | 0.3 a | 0.8 a | .1 a |
| Polyken Probe Tack (Kg) | 0.7 v | 0.3 a | 0.6 v | 0.2 a |
| 23°C Holding Power to Steel, 2.54 x 10⁻² m, x 2.540 10⁻²m (1 inch²) overlap , 19.614 N (2Kg) (minutes) | 3 v | >4000 | 1 v | >4000 |
| 95 C Holding Power to MYLAR, 25.40 x 10⁻²m x 2.540 x 10^{-2-m} (1 inch ²) overlap, 4.903 N (500 g) (minutes): | 0 v | >1000 | >1000 | >1000 |
| "v" is viscous splitting of the adhesive (adhesion > cohesion) and " a" is adhesive release from substrate interfaces (cohesion > adhesion). (MYLAR, LINDE, UVI, IRGANOX and REGALREZ are trademarks). | | | | |

### Example 2

Adhesives 2-E to 2-H, shown on the top of Table 2, were prepared, cast, and cured the same as in example 1. The test results in Table 2 show that a hydrogenated tackifying resin, REGALREZ 1085, can be added to the binder system to make excellent adhesives, including excellent PSA's 2-F and 2-H. All four adhesives are examples of how the polymers of this invention are highly advantageous.

**Table 2**

| Adhesive Formulations using Tackifying Resin 100 part formulations shown with results | | | | |
|---|---|---|---|---|
| Ingredient | 2-E | 2-F | 2-G | 2-H |
| Polymer 1 | 53.9 | 35.8 | 36.4 | 24.2 |
| | | | | |
| Polymer 4 | 20.5 | 13.6 | 37.9 | 25.2 |
| | | | | |
| REGALREZ 1085 | 25.0 | 50.0 | 25.0 | 50.0 |
| | | | | |
| UVI 6974 | 0.50 | 0.50 | 0.50 | 0.50 |
| | | | | |
| IRGANOX 1010 | 0.15 | 0.15 | 0.15 | 0.15 |
| | | | | |
| w% epoxidized diene polymer in the binder | 72 | 72 | 49 | 49 |
| | | | | |
| w% monohydroxy diene polymer in the binder | 28 | 28 | 51 | 51 |
| | | | | |
| Mole Ratio of Epoxide to Hydroxyl | 11 | 11 | 4 | 4 |
| | | | | |

| Adhesive Properties after UV cure and postbake: | | | | |
|---|---|---|---|---|
| | | | | |
| Gel Content of binder mix (w%) | 100 | 100 | 100 | 100 |
| | | | | |
| 180 Peel from steel (pli) | 0.1 a | 3.8 a | 0.3 a | 3.5 a |
| | | | | |
| TMI Loop Tack (pli) | 0.3 a | 2.8 a | 1.0 a | 4.4 a |
| | | | | |
| Polyken Probe Tack (Kg) | 0.6 a | 1.5 a | 0.5 a | 1.2 a |
| | | | | |
| 23°C Holding Power to | >4000 | >4000 | >4000 | >4000 |
| | | | | |
| steel, 2.54 x 10⁻²m x 2.54 x 10⁻²m (1 inch²), 19.614 N (2Kg) (min) | >4000 | >4000 | >4000 >4000 | bad prep bad prep |
| | | | | |
| 95 C Holding Power to | >1000 | >1000 | >1000 | >1000 |
| | | | | |
| MYLAR, 2.54 x 10-2m x 2.54 x 10⁻²m (1 inch²), 4.903 N (500g) (min) | >1000 | >1000 | 0 a | 0 a |
| "v" is viscous splitting of the adehsive (adhesion > cohesion) and "a" is adhesive release from substrate interfaces (cohesion > adhesion). | | | | |

### Example 3

Adhesives 3-I to 3-N, shown on the top of Table 3, were prepared, cast, and cured as in experiment 1. The adhesives that contain the monohydroxy diene polymer, Polymer 4, are superior PSA adhesives than those that do not contain the monohydroxy polymer. This is evident by comparing the replicated PSA's 2-F, 3-M, 2-H, and 3-K to adhesive 3-I in Table 3. PSA's 2-F, 3-M, 2-H, and 3-K show an excellent balance of properties. However, 3-I overcures and loses its tack properties.

The replacement of some of the monohydroxy polymer with a dihydroxy diene polymer in the binder system can further improve the balance of properties of the adhesive as exemplified by PSA 3-N in Table 3. In a direct comparison to PSA 3-K, the addition of the dihydroxy polymer, Polymer 6, increases the polymer gel content which improves the cohesive strength of the adhesive.

**Table 3**

| Adhesives with and without Hydroxy Diene Polymer 100 part formulations shown with results | | | | |
|---|---|---|---|---|
| Ingredient | 3-I | 3-K | 3-M | 3-N |
| Polymer 1 | 49.7 | 24.2 | 35.8 | 24.2 |
| Polymer 4 | 0 | 25.2 | 13.6 | 20.2 |
| Polymer 6 | 0 | 0 | 0 | 5.0 |
| REGALREZ 1085 | 49.7 | 50.0 | 50.0 | 50.0 |
| UVI 6974 | 0.50 | 0.50 | 0.50 | 0.50 |
| IRGANOX 1010 | 0.15 | 0.15 | 0.15 | 0.15 |
| w% epoxidized diene polymer in the binder | 100 | 49 | 72 | 49 |
| w% hydroxy diene polymer in the binder | 0 | 51 | 28 | 51 |
| Ratio of Epoxide to Hydroxyl | infinite | 4 | 11 | 3.6 |

| Adhesive Properties after UV cure andpostbake: | | | | |
|---|---|---|---|---|
| Gel Content of binder mix (w%) | 98 | 82 | 93 | 97 |
| 180° Peel from steel (pli) | 3.2 a | 4.3 a | 4.2 a | 3.3 a |
| TMI Loop Tack (pli) | 0 a | 4.5 a | 2.0 a | 3.6 a |
| Polyken Probe Tack (Kg) | 0 a | 1.1 a | 0.7 a | 1.7 a |
| 23°C Holding Power to | >4000 | >4000 | >4000 | >4000 |
| Steel, 2.54 x 10⁻²m x 2.54 x 10⁻²m (1 inch²), 19.614 N (2Kg) (min) | >4000 | >4000 | >4000 | >4000 |
| 95 C Holding Power to | >1000 | >1000 | >1000 | >1000 |
| MYLAR, 2.54 x 10⁻²m x 2.54 x 10⁻²m (1 inch²), 4.903 N (500 g) (min) | >1000 | 0 v | >1000 | >1000 |
| "v" is viscous splitting of the adehsive (adhesion > cohesion) and "a" is adhesive release from substrate interfaces (cohesion > adhesion). | | | | |

### Example 4

Adhesives 4-A to 4-E, shown in Table 4, were made, cast, and cured as in example 1. Adhesives 4-B and 4-D are not within the scope of the invention because the ratio of the epoxide to the hydroxyl, R, is less than 1.5. 4-B has poor cure as evidenced by the binder gel content (51w%) and lacks adequate cohesive strength. 4-D is even worse since it did not have enough cohesive strength to even run the gel content test. It is believed that the addition of the process oil, SHELLFLEX 371 (trademark), is the main reason that 4-D is worse than 4-B. Adhesives 4-A, 4-C, and 4-E all fall within the scope of the invention. 4-A is an excellent PSA. It contains no process oil. 4-C and 4-E are not good adhesives. They both demonstrate the danger of using a significant amount of process oil to dilute the adhesives of the invention. 4-E is better than 4-C because 4-E is diluted with less process oil. 4-E might be improved, without removing the process oil, by replacing some of the monohydroxy diene polymer with a dihydroxy diene polymer since its R value (2.3) is approaching 1.5. However, it is believed that the SHELLFLEX 371 should be removed from the formulation.

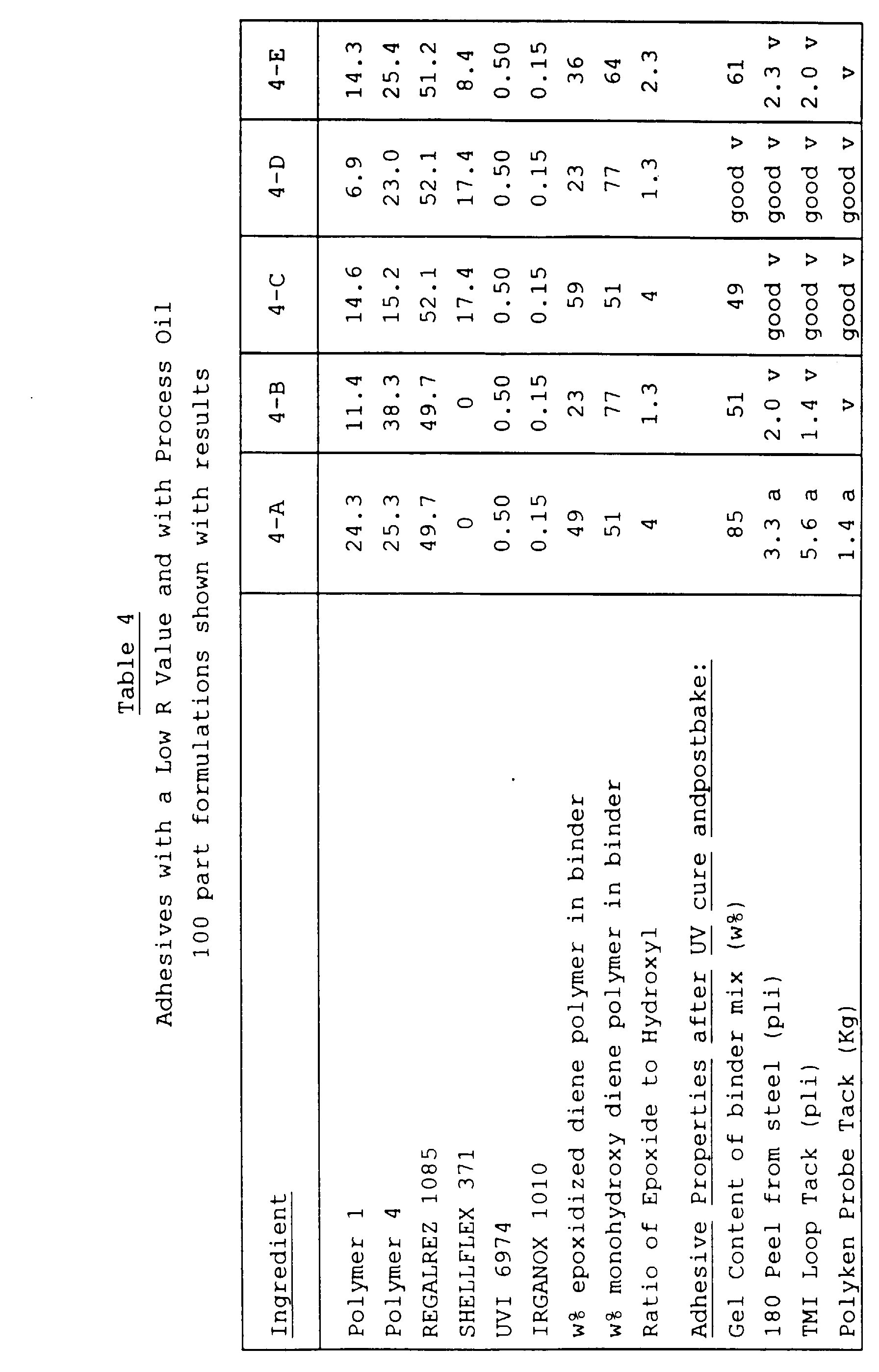

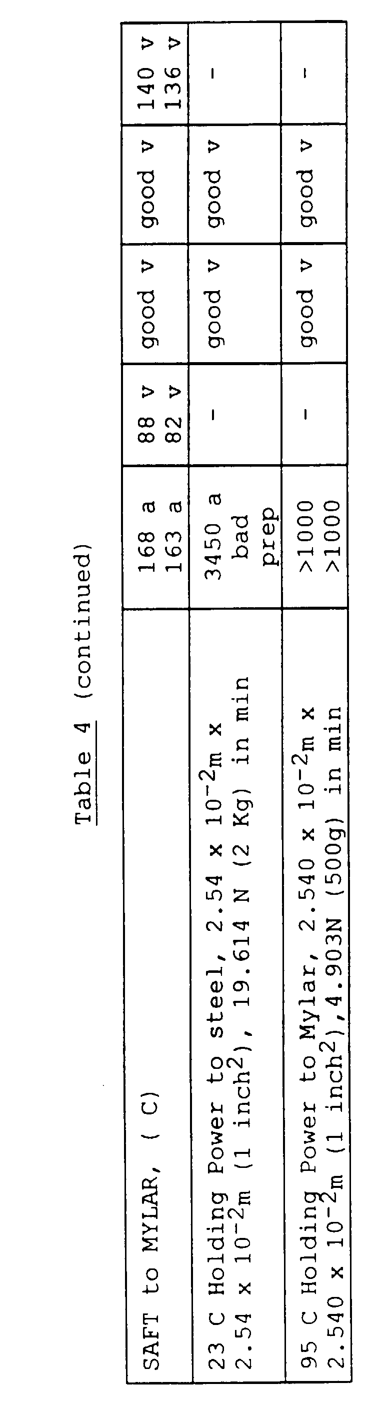

### Example 5

Adhesives 5-F to 5-Q, shown in Table 5, were prepared, cast, and cured as in example 1. All of the adhesives use a binder consisting of 49 w% epoxidized diene polymer and 51w% monohydroxy diene polymer. All are examples of the invention. Adhesive 5-F uses Polymer 4 as used in the previous examples. Adhesives 5-G to 5-P are a series where the molecular weight of the monohydroxy polymer is increased from 1,500 to 18,000. Adhesives 5-F to 5-H are excellent pressure sensitive adhesives with high aggressive tack and excellent holding power. These use monohydroxy diene polymer having molecular weights from 1,500 to 3,500. Adhesives 5-I, 5-J, and 5-P use monohydroxy diene polymer of molecular weights from 9,300 to 18,000. These also have excellent aggressive tack but they show some loss of cohesive strength with 18,000 MW polymer adhesive being weaker than the two at 9,300 and 12,000. Adhesives 5-I to 5-P need a little better cure to be good PSA's. It is thought that this may be accomplished by increasing the UV radiation dose or by replacing a portion of the monohydroxy polymer with a dihydroxy diene polymer. Adhesive 5-Q is an example where the epoxidized diene polymer also contains a hydroxy group. The cure of 5-Q is excellent, as are its aggressive tack and SAFT. It gives all indications of having excellent cohesive strength, yet it exhibited viscous splitting during the room temperature HP test, an apparent spurious result.

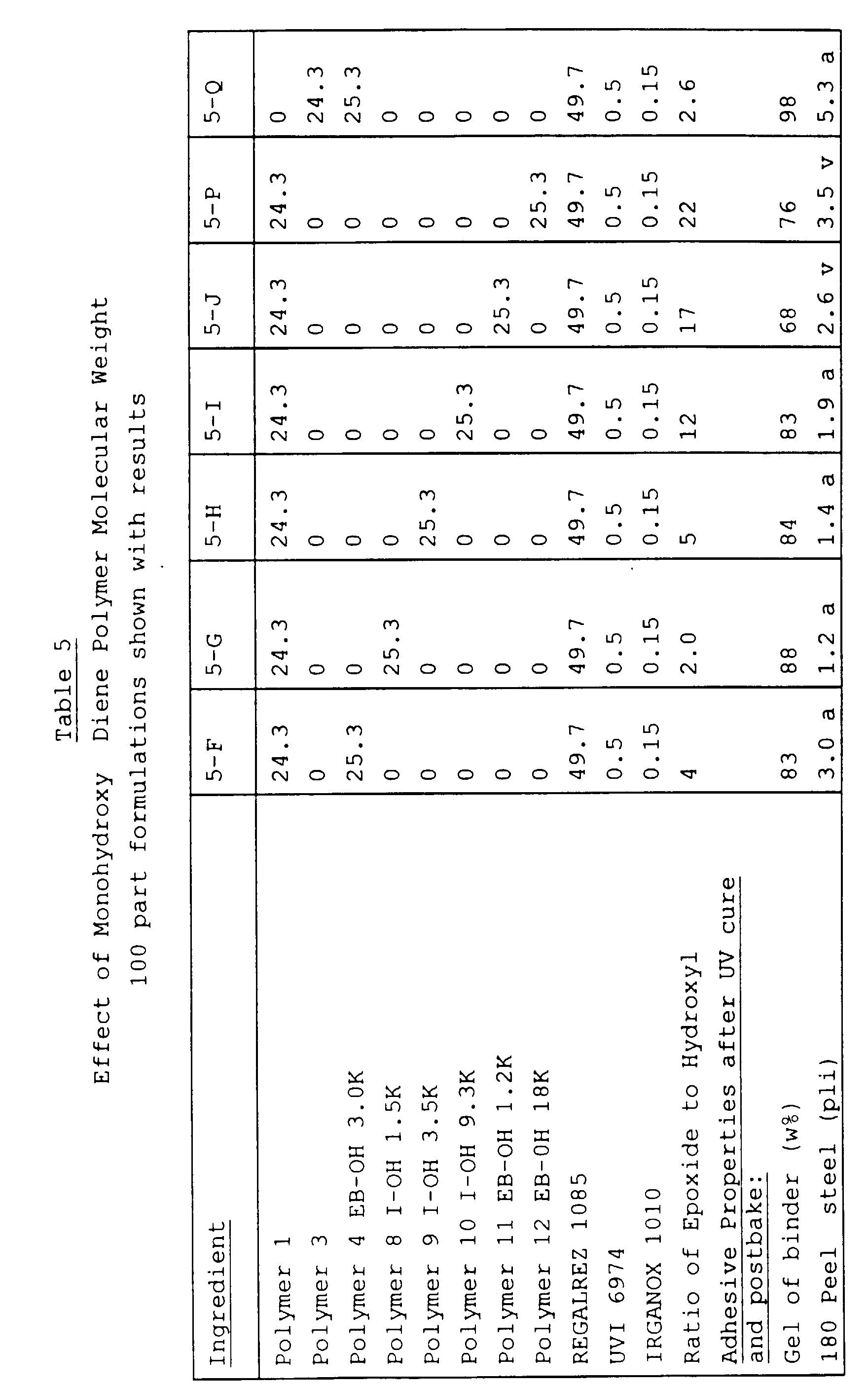

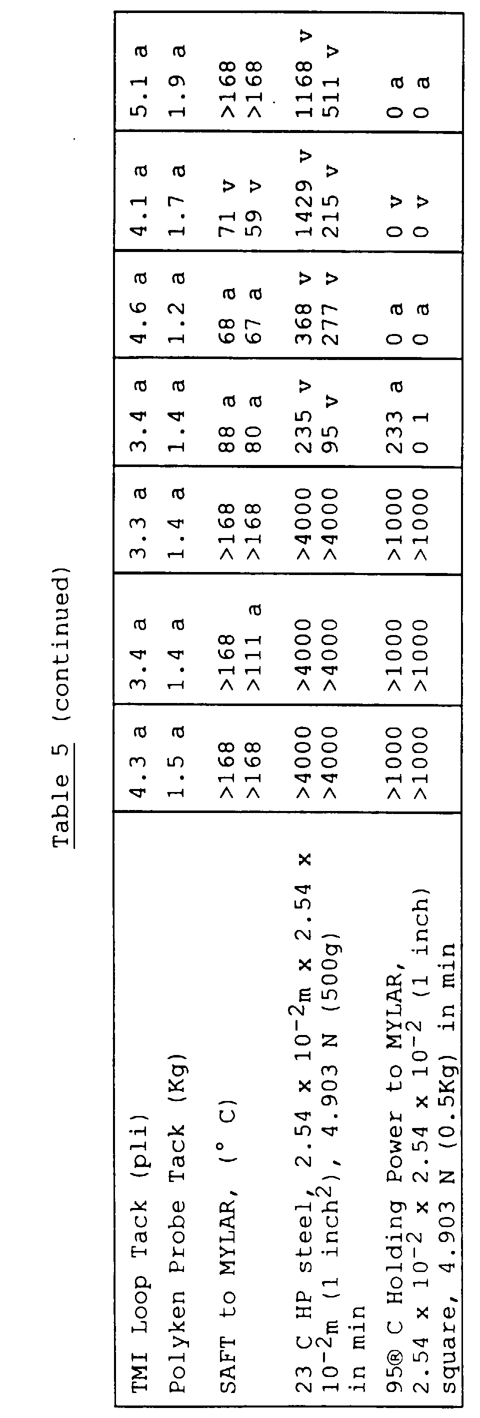

### Example 6

Adhesives 6-1 to 6-10, shown in Table 6, were prepared, cast, and cured as in experiment 1. No 180 Peel testing was done because of equipment malfunction. Adhesives 6-2, 6-4, and 6-7 are not examples of the invention. Adhesive 6-2 uses Polymer 2 which has an epoxide content below the lower boundary of the invention. Thus, despite the fact that 6-2 uses a preferred monohydroxy diene polymer, has an R value of 4, and contains a preferred amount of tackifying resin, it exhibits poor cohesive strength because of the low epoxide content. Adhesive 6-7 also uses Polymer 2 and still exhibits some cohesive strength problems, even though part of the monohydroxy polymer is replaced with reinforcing dihydroxy diene polymer. Adhesive 6-4 had no cohesive strength at all. It remained a "goo" even after UV cure and postbake and was not sufficiently handleable to even perform the gel test. Adhesive 6-4 used Polymer 5, a polymer like Polymer 3 except that it was not epoxidized. The binder of adhesive 6-9 contained 49 w% Polymer 1 polymer but had no monohydroxy diene polymer. Instead it contained 51 w% dihydroxy diene polymer. It showed excellent cure and strength, but had no aggressive tack because the monohydroxy diene polymer was missing.

Adhesives 6-1, 6-3, 6-5, 6-6, and 6-8 are all examples of the invention, and all have good PSA properties. Adhesive 6-10 shows how a dihydroxy diene polymer can be used when the R value is below 1.5. The adhesive is just outside the invention because its R value (0.7) is a little smaller than 0.75. The gel content of the binder system is low and the adhesive is beginning to show viscous splitting (on PPT testing).

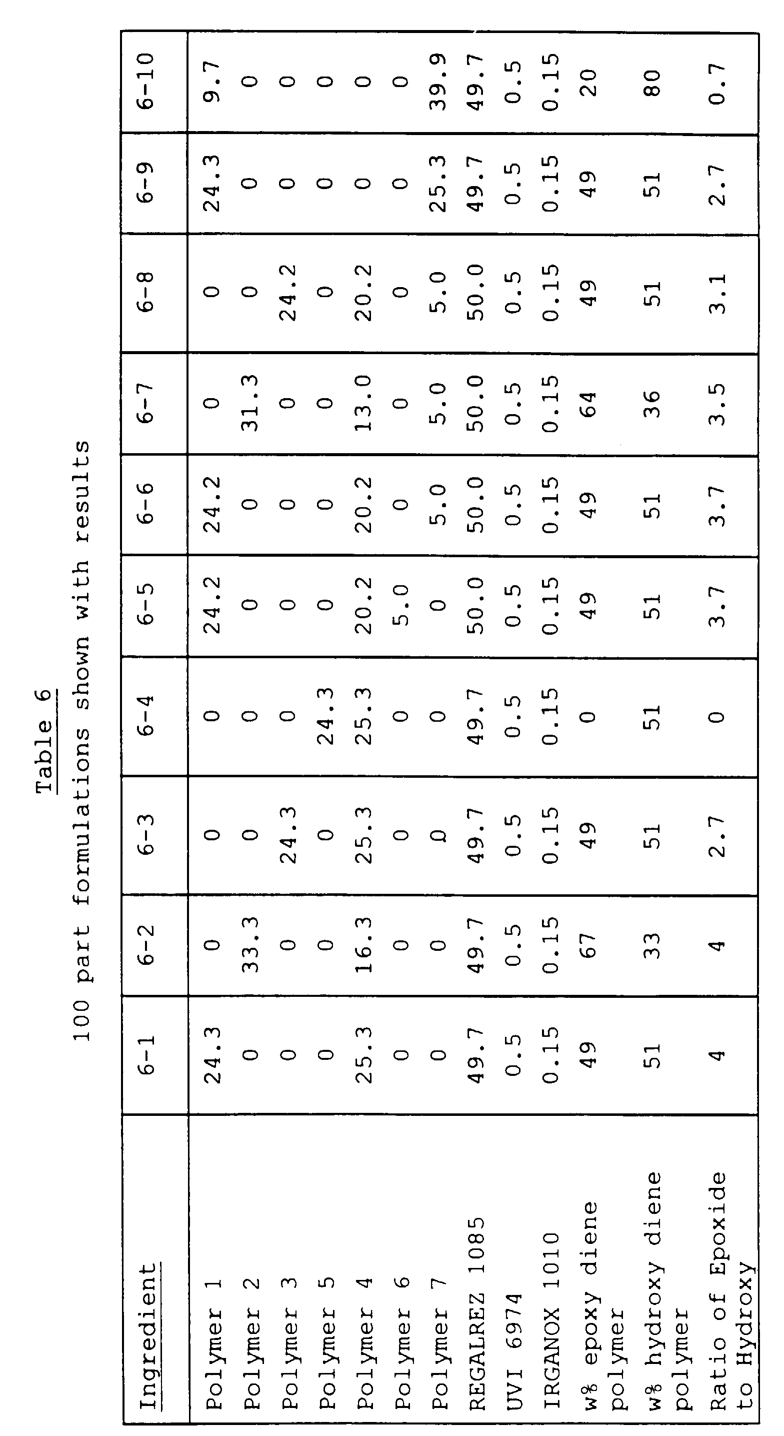

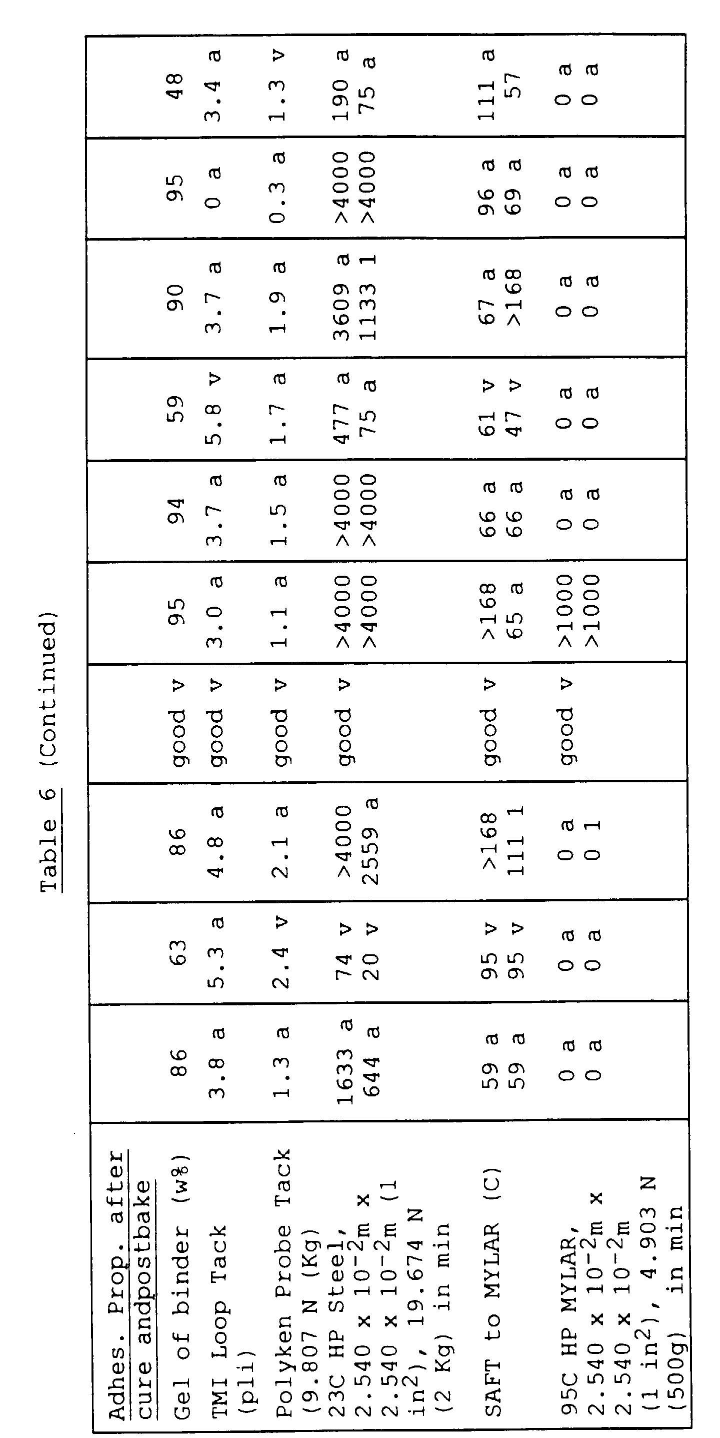

### Example 7

Formulations were prepared to test the concept of using blends of epoxidized diene polymers with diene monools and diols as laminating adhesives. Laminating adhesives seem operate via an entirely different mechanism than PSA's which are cast in relatively thick layers. This thick layer is capable of absorbing much energy through viscous flow during deformation and this provides the strength of PSAs. In laminating adhesives, the layers are relatively thin and these adhesive layers must strongly join two substrates together. Because of the thinness, viscous dissipation of energy within the adhesive layer is not a dominant strength mechanism. Rather, the adhesion between adhesive and substrate must provide the required strength.

Two epoxidized diene polymers, one monool and one diol polymer were used in the laminating adhesive formulations. These polymers are described in Table 7. Formulations were made according to Table 8. The ingredients were dissolved in THF to prepare a 10% solids solution. Preliminary work indicated that our curing agent, Leecure B1310, would completely dissolve in THF. Partial solubility was found using toluene as the solvent. All ingredients except the B1310 (a blocked BF₃ catalyst from Leepoxy, Inc.) were dissolved in THF. Once dissolved B1310 was added and the solution was placed on a roller for several minutes. The formulation was then cast on a poly(ethylene terephthalate) film to give a nominal adhesive layer thickness of 0.762 x 10⁻⁵m (0.3 mils). The film was allowed to air dry for 1 hour. When dry, another poly(ethylene terephthalate) film was laminated to the top of the adhesive layer. The laminate was pressed together using a 0.972 kg (2 lb) roller. One inch strips were cut and then heat treated under moderate pressure at 50°C for 60 seconds. The laminates were then tested for strength using a T-peel geometry on an Instron tensile tester. The peel rate was 10 inches per minute.

Table 9 shows the results for laminates as made and then aged at room temperature. The control with the star epoxidized diene polymer (control 1) shows a low T-peel strength of 0.519 N (53 grams) per linear inch 2.54 x 10⁻²m (gli) initially. The diblock hydroxyl functional epoxidized polymer had a strength so low that it was it could not be tested. The total molecular weight of Polymer 13 is much lower than the star polymer Polymer 1 and so must experience more chemical crosslinking to form a load bearing network. This control did have a higher level of tackifier than control 1 and this should make it less load bearing also. By including the monool (Polymer 4) in the formulation (formulation 1) a lower strength than with the epoxidized polymer alone was achieved. Only with the Polymer 13 was an improvement found by adding the monool. Compare control 2 and formulations 3 and 4. Incorporation of the monool alone (formulation 3) gave an increase from immeasurably low strength to 124 gli. Additional incorporation of a diol gave a further increase to 211 gli.

After aging 120 hours the initial trends are continued with the exception of formulation 2 which should be compared to control 1. At very long times the reaction has proceeded to such a level that the formulations containing monohydroxylated epoxidized diblock are even stronger than the non-hydroxylated epoxidized star polymer control.

After aging 24 hours the cure reaction continued to proceed. Some increase in T-peel value is seen for all samples. The mode of failure is still cohesive (that is the adhesive layer fails (viscous splitting) rather than the interface). The trends observed for the initial T-peel values are continued at 24 hours.

Incorporation of monool or diol served to increase the strength of the laminating adhesive when the epoxidized polymer was hydroxyl terminated. The best strengths achieved are in the range of 100-400 gli initial T-peel strength.

**Table 7**

| Polymers used in the Formulations | | | |
|---|---|---|---|
| polymer | architecture | molecular weight | epoxy level (meq/g) |
| Polymer 1 | (I-EB)₁₆ | (1000-4800) | 1.4 |
| Polymer 13 | I-S/EB-EB-OH | 2000-2500/1350-150 | 1.5 |
| Polymer 4 | EB-OH | 3000 | 0 |
| Polymer 6 | HO-B-OH | 4000 | 0 |
| I: isoprene B: butadiene EB: hydrogenated butadiene S: styrene S/EB: mixed block of styrene and hydrogenated butadiene OH: hydroxyl group | | | |

**Table 8**

| Laminating Adhesive Formulations | | | | | | |
|---|---|---|---|---|---|---|
| | formulations (ingredient amount in grams) | | | | | |
| ingredients | control 1 | control 2 | 1 | 2 | 3 | 4 |
| Polymer 1 | 3.18 | - | 2.4 6 | - | - | - |
| Polymer 13 | - | 1.59 | - | 2.47 | 1.80 | 1.17 |
| Polymer 4 | - | - | 1.05 | 1.05 | 0.66 | 1.00 |
| Polymer 6 | - | - | - | - | - | 0.26 |
| REGALREZ 1085 | 1.46 | 3.27 | 1.24 | 1.26 | 2.42 | 2.45 |
| LEECURE B1310 | 0.32 | 0.16 | 0.27 | 0.26 | 0.18 | 0.14 |

**Table 9**

| T-peel Results | | | |
|---|---|---|---|
| Formulation | T-peel (9.807 x 10⁻³N (grams) per linear 2.54 x 10 ⁻²m (inch) (g) A for adhesive, C for cohesive) | | |
| | 0 hrs | 24 hrs | 120 hrs |
| control 1 | 53/C | 96/C | 150/C |
| control 2 | 0/C | 3/C | 6/C |
| 1 | 25/C | 42/C | 114/C |
| 2 | 33/C | 95/C | 207/C |
| 3 | 124/C | 119/C | 128/C |
| 4 | 211/C | 236/C | 277/C |

## Claims

1. A curable binder for pressure sensitive adhesive and sealants which comprises from 20 to 95 % by weight of the total polymer of an epoxidized polydiene polymer having an epoxy content of from 0.75 to 7.0 meq of epoxy per gram of polymer, from 5 to 80 % by weight of the total of polymer of a monohydroxylated diene polymer, and/or a polyhydroxylated polydiene polymer, wherein neither the monohydroxylated polymer nor the polyhydroxylated polymer may be epoxidized or contain any other functionality that will react with the epoxy groups on the epoxidized polymer.

2. The curable binder of claim 1 wherein the molar ratio of the amount of epoxide functionality to the amount of hydroxyl functionality is greater than 0.75.

3. The curable binder of claim 2 wherein the ratio is at least 1.5.

4. The curable binder of claims 1-3 wherein the monohydroxylated diene polymer has a molecular weight of from 3000 to 6,000.

5. The curable binder of claims 1-4, wherein the epoxidized diene polymer has the formula
(A-B-Aₚ)ₙ-Yᵣ-(A_{q}-B)ₘ
wherein Y is a coupling agent, coupling monomers or an initiator, and wherein A and B are polymer blocks which are homopolymer blocks of conjugated diolefin monomers, copolymer blocks of conjugated diolefin monomers, or copolymer blocks of conjugated diolefin monomers and monoalkenyl aromatic hydrocarbon monomers; and wherein the A blocks have a greater number of di-, tri- and tetra-substituted epoxides per unit of block mass than do the B blocks; and wherein the A blocks have a molecular weight of from 100 to 3000 and the B blocks have a molecular weight of from 1000 to 15,000, and wherein p and q are 0 or 1 and n > 0, r is 0 or 1, m ≥ 0 and n + m ranges from 1 to 100.

6. The curable binder of claims 1-5 wherein the epoxidized polymer is an epoxidized monohydroxylated polymer comprised of at least two polymerizable ethenically unsaturated hydrocarbon monomers wherein at least one is a diene monomer which yields unsaturation suitable for epoxidation.

7. A curable binder for adhesive and sealants according to claims 1-6 wherein a dihydroxylated diene polymer is included in an amount of from 5 to 80 % by weight of the total of polymer..

8. An adhesive comprising the binder of claims 1-7 and a tackifying resin in an amount from 0 to 80% by weight of the total of polymer and resin.

9. A sealant comprising the binder of claims 1-7 and a tackifying resn in an amount from 0 to 80% by weight of the total of polymer and resin.

## Patentansprüche

1. Härtbares Bindemittel für druckempfindliche Klebstoffe und Dichtmittel, das 20 bis 95 Gew.-% des Gesamtpolymers aus einem epoxidierten Polydienpolymer mit einem Epoxygehalt von 0,75 bis 7,0 mÄq Epoxy je Gramm Polymer und 5 bis 80 Gew.-% des gesamten Polymers aus einem monohydroxylierten Dienpolymer und/oder einem polyhydroxylierten Polydienpolymer umfaßt, worin weder das monohydroxylierte Polymer noch das polyhydroxylierte Polymer epoxidiert sein dürfen oder eine andere Funktionalität enthalten dürfen, die mit den Epoxygruppen auf dem epoxidierten Polymer reagieren wird.

2. Härtbares Bindemittel nach Anspruch 1, worin das Molverhältnis der Menge an Epoxidfunktionalität zur Menge an Hydroxylfunktionalität größer als 0,75 ist.

3. Härtbares Bindemittel nach Anspruch 2, worin das Verhältnis wenigstens 1,5 beträgt.

4. Härtbares Bindemittel nach den Ansprüchen 1 bis 3, worin das monohydroxylierte Dienpolymer ein Molekulargewicht von 3000 bis 6000 aufweist.

5. Härtbares Bindemittel nach den Ansprüchen 1 bis 4, worin das epoxidierte Dienpolymer die Formel
(A-B-Aₚ)ₙ-Yᵣ-(A_{q}-B)ₘ
aufweist, worin Y ein Kupplungsmittel, Kupplungsmonomer oder ein Initiator ist und worin A und B Polymerblöcke bedeuten, die Homopolymerblöcke von konjugierten Diolefinmonomeren, Copolymerblöcke von konjugierten Diolefinmonomeren oder Copolymerblöcke von konjugierten Diolefinmonomeren und monoalkenylaromatischen Kohlenwasserstoffmonomeren sind; und worin die Blöcke A eine größere Anzahl an di-, tri- und tetra-substituierten Epoxiden je Einheit Blockmasse haben als die Blöcke B; und worin die Blöcke A ein Molekulargewicht von 100 bis 3000 und die Blöcke B ein Molekulargewicht von 1000 bis 15.000 haben und worin p und q 0 oder 1 bedeuten und n > 0 ist, r 0 oder 1 ist, m ≥ 0 ist und n+m im Bereich von 1 bis 100 liegt.

6. Härtbares Bindemittel nach den Ansprüchen 1 bis 5, worin das epoxidierte Polymer ein epoxidiertes monohydroxyliertes Polymer ist, das aus wenigstens zwei polymerisierbaren, ethenisch ungesättigten Kohlenwasserstoffmonomeren besteht, von denen wenigstens eines ein Dienmonomer ist, das eine für die Epoxidation geeignete Unsättigung ergibt.

7. Härtbares Bindemittel für Klebstoffe und Dichtmittel nach den Ansprüchen 1 bis 6, worin ein dihydroxyliertes Dienpolymer in einer Menge von 5 bis 80 Gew.-% des Gesamtpolymers enthalten ist.

8. Klebstoff mit einem Gehalt an dem Bindemittel nach den Ansprüchen 1 bis 7 und an einem klebrigmachenden Harz in einer Menge von 0 bis 80 Gew.-% der Gesamtmenge aus Polymer und Harz.

9. Dichtmittel mit einem Gehalt an dem Bindemittel nach den Ansprüchen 1 bis 7 und an einem klebrigmachenden Harz in einer Menge von 0 bis 80 Gew.-% der Gesamtmenge aus Polymer und Harz.

## Revendications

1. Liant durcissable pour des agents d'étanchéité ou de calfeutrage et des adhésifs sensibles à la pression, qui comprend de 20 à 95% en poids du polymère total d'un polymère de polydiène époxydé possédant une teneur en époxy de 0,75 à 7,0 méq d'époxy par gramme de polymère, de 5 à 80% en poids du total du polymère d'un polymère de diène monohydroxylé et/ou d'un polymère de polydiène polyhydroxylé, où ni le polymère monohydroxylé, ni le polymère polyhydroxylé peuvent être époxydés ou contenir une quelconque autre fonctionnalité qui réagirait avec les groupes époxy sur le polymère époxydé.

2. Liant durcissable suivant la revendication 1, caractérisé en ce que le rapport molaire de la quantité de fonctionnalité époxyde à la quantité de fonctionnalité hydroxyle est supérieur à 0,75.

3. Liant durcissable suivant la revendication 2, caractérisé en ce que le rapport est d'au moins 1,5.

4. Liant durcissable suivant les revendications 1 à 3, caractérisé en ce que le polymère de diène monohydroxylé possède un poids moléculaire de 3000 à 6.000.

5. Liant durcissable suivant les revendications 1 à 4, caractérisé en ce que le polymère de diène époxydé répond à la formule suivante
(A-B-Aₚ)ₙ-Yᵣ-(A_{q}-B)ₘ
dans laquelle Y représente un agent de couplage, des monomères de couplage ou un amorceur et dans laquelle A et B représentent des séquences polymériques qui sont des séquences homopolymériques de monomères de dioléfines conjuguées, des séquences copolymériques de monomères de dioléfines conjuguées, ou des séquences copolymériques de monomères de dioléfines conjuguées et de monomères d'hydrocarbures monoalcénylaromatiques et dans laquelle les séquences A possèdent un plus grand nombre d'époxydes di-, tri- et tétrasubstitués par unité de masse séquentielle que les séquences B et dans laquelle les séquences A possèdent un poids moléculaire de 100 à 3000 et les séquences B possèdent un poids moléculaire de 1000 à 15.000 et dans laquelle p et q sont égaux à 0 ou à 1 et n > à 0, r est égal à 0 ou à 1, m ≥ à 0 et n + m varie de à 100.

6. Liant durcissable suivant les revendications 1 à 5, caractérisé en ce que le polymère époxydé est un polymère monohydroxylé époxydé constitué d'au moins deux monomères d'hydrocarbures éthyléniquement insaturés polymérisables, où au moins l'un des monomères est un monomère de diène qui donne une insaturation appropriée à l'époxydation.

7. Liant durcissable pour des adhésifs et des agents d'étanchéité ou de calfeutrage suivant les revendications 1 à 6, caractérisé en ce qu'un polymère de diène dihydroxylé y est incorporé en une proportion de 5 à 80% en poids du total du polymère.

8. Adhésif comprenant le liant suivant l'une quelconque des revendications 1 à 7 et une résine conférant de l'adhésivité en une proportion de 0 à 80% en poids du total du polymère et de la résine.

9. Agent d'étanchéité ou de calfeutrage comprenant un liant suivant l'une quelconque des revendications 1 à 7 et une résine conférant de l'adhésivité en une proportion de 0 à 80% en poids du total du polymère et de la résine.
